# EUROPEAN PATENT APPLICATION

(11) **EP 2 910 452 A2**
(43) Date of publication of application: **26.08.2015**
(21) Application number: 15155637.0
(22) Date of filing: 18.02.2015
(51) Int. Cl.: B62D 1/19

(54) **Steering system**

(30) Priority: 21.02.2014 JP 2014031943
(71) Applicant: JTEKT CORPORATION, Osaka-shi Osaka 542-8502 (JP); FUJI KIKO Co., Ltd., Kosai-shi, Shizuoka 431-0431 (JP)
(72) Inventor: Sakata, Toru, KOSAI-SHI, SHIZUOKA,, 431-0431 (JP)
(74) Representative: Winter, Brandl, Fürniss, Hübner, Röss, Kaiser, Polte - Partnerschaft mbB

(57) **Abstract**

In a steering system, an energy absorbing member (35; 60; 60B) is plastically deformed by being drawn by a drawing shaft (32; 71, 72; 71, 72B) during a secondary collision. A first drawing shaft (32) or a plurality of second drawing shafts (71, 72; 71, 72B) is provided as the drawing shaft (32; 71, 72; 71, 72B). The first drawing shaft (32) or an adjusted shaft (72; 72B) among the second drawing shafts (71, 72; 71, 72B) is driven to change a drawing portion of the first drawing shaft (32) that is engaged with the energy absorbing member (35; 60; 60B) to draw the energy absorbing member (35; 60; 60B) during the secondary collision or to change the number of the second drawing shafts engaged with the energy absorbing member (35; 60; 60B) to draw the energy absorbing member (35; 60; 60B) during the secondary collision such that a shock absorbing load is changed.

## Description

### BACKGROUND OF THE INVENTION

### 1. Field of the Invention

The present invention relates to a steering system.

### 2. Description of Related Art

US 2012/0024101 A suggests a steering system that switches between a first state and a second state in accordance with an advanced/retracted position of a pin, so as to change a shock absorbing load. More specifically, in the first state, a drawing shaft at the advanced position expands and draws a slit provided in a second part, and thus, the shock absorbing load is obtained. In the second state, the drawing shaft is displaced to the retracted position to cancel interference between the drawing shaft and the slit, thereby canceling the shock absorbing load related to the drawing shaft.

Since the shock absorbing load related to the drawing shaft is not generated in the second state, another shock absorbing structure that differs from the drawing shaft and that generates the shock absorbing load regardless of the first state and the second state is provided. More specifically, a shock absorbing plate is provided, the shock absorbing plate including: a plate-shaped first part a position of which relative to a vehicle body is fixed during a secondary collision; and a second part that is folded from the first part via a folded region, extends in parallel with the first part, and is provided with the slit. During the secondary collision, the second part moves in parallel with the first part while moving the folded region, thereby absorbing the shock.

In US 2012/0024101 A, since the drawing shaft is completely drawn from the slit in the second state, the other shock absorbing structure differing from the drawing shaft is required. As a result, the structure of the steering system becomes complicated.

### SUMMARY OF THE INVENTION

The present invention provides a steering system with a simplified structure, in which a shock absorbing load obtained using a drawing shaft is adjusted.

An aspect of the present invention provides a steering system (1; 1A; 1B) that includes: a steering shaft (3) having an end to which a steering member (2) is coupled, the steering shaft (3) being extendable and contractable in an axial direction; a steering column (10) that includes a hollow lower jacket (12) and a hollow upper jacket (11), and that supports the steering shaft (3) such that the steering shaft (3) is rotatable, the steering column (10) being extendable and contractable in the axial direction due to relative movement of the lower jacket (12) and the upper jacket (11), and the lower jacket (12) and the upper jacket (11) being fitted to each other; and a shock absorbing mechanism (30; 30A; 30B) that absorbs a shock in conjunction with movement of the upper jacket (11) relative to the lower jacket (12) during a secondary collision, wherein: the shock absorbing mechanism (30; 30A; 30B) includes: a drawing shaft whose position in a relative movement direction relative to one of the upper jacket (11) and the lower jacket (12) is fixed during the secondary collision; and an energy absorbing member (35; 60; 60B) that includes a relative position fixed portion (38; 61) whose position in the relative movement direction relative to the other of the upper jacket (11) and the lower jacket (12) is fixed during the secondary collision; the energy absorbing member (35; 60; 60B) is plastically deformed by being drawn by the drawing shaft during the secondary collision; a first drawing shaft (32) or a plurality of second drawing shafts (71, 72; 71, 72B) is provided as the drawing shaft, the first drawing shaft (32) having a plurality of drawing portions (32a, 32b) with different outside diameters that are separated from each other in a drawing shaft direction, and the plurality of second drawing shafts (71, 72; 71, 72B) having a constant outside diameter; the plurality of second drawing shafts (71, 72; 71, 72B) includes an adjusted shaft (72; 72B) whose position is able to be adjusted in the drawing shaft direction and an unadjusted shaft (71) whose position is unable to be adjusted in the drawing shaft direction; the shock absorbing mechanism (30; 30A; 30B) includes a drawing unit (34; 90; 90B) including: a unit main body that is fixed to the one of the upper jacket (11) and the lower jacket (12); the first drawing shaft (32) or the adjusted shaft (72; 72B) that is supported by the unit main body and is displaceable in the drawing shaft direction that intersects with the relative movement direction of the upper jacket (11) and the lower jacket (12); and a drive element (33) that is housed in the unit main body and drives the first drawing shaft (32) or the adjusted shaft (72; 72B) in the drawing shaft direction; and the drive element (33) drives the first drawing shaft (32) or the adjusted shaft (72; 72B) to change the drawing portion of the first drawing shaft (32) that is engaged with the energy absorbing member (35; 60; 60B) to draw the energy absorbing member (35; 60; 60B) during the secondary collision or to change the number of the second drawing shafts engaged with the energy absorbing member (35; 60; 60B) to draw the energy absorbing member (35; 60; 60B) during the secondary collision among the plurality of second drawing shafts (71, 72; 71, 72B) such that a shock absorbing load is changed.

According to the above aspect, a diameter of the first drawing shaft that draws the energy absorbing member during the secondary collision is variable. Alternatively, the number of the second drawing shafts drawing the energy absorbing member during the secondary collision is variable. Accordingly, the shock absorbing load can be adjusted only at a drawing position between the drawing shaft and the energy absorbing member. Thus, the shock absorbing load can be adjusted with a simple structure.

In the above aspect, the unit main body may be fixed to the upper jacket (11); the energy absorbing member may be an energy absorbing plate (35) that is provided with a slit (38) extending in the relative movement direction, and the energy absorbing plate (35) may be plastically deformed by relative movement of one of the drawing portions of the first drawing shaft (32) and the slit (38) in the relative movement direction during the secondary collision such that the shock absorbing load is generated; and a width (W) of the slit (38) may be set smaller than an outside diameter (D1, D2) of each of the drawing portions of the first drawing shaft (32), and the slit (38) may constitute a relative position fixed portion whose position relative to the lower jacket (12) in the relative movement direction is fixed during the secondary collision.

According to the above aspect, the energy absorbing plate having the slit is used as the energy absorbing member. One of the plurality of drawing portions with different outside diameters in the first drawing shaft draws the slit of the energy absorbing plate, thereby adjusting the shock absorbing load during the secondary collision. The shock absorbing loads that are obtained using the drawing portions can be tuned independently from each other by changing the outside diameter of each of the drawing portions. Thus, the shock absorbing load can be set finely.

In the above aspect, a telescopic lock mechanism that fixes a position of the upper jacket (11) relative to the lower jacket (12) in the axial direction may be provided; the telescopic lock mechanism (20) may include: a fixed bracket (17) that is provided with a rotary shaft insertion hole (40), and is fixed to a vehicle body (13); a rotary shaft (21) rotatably supported by the rotary shaft insertion hole (40); an operation lever (22) that rotates together with the rotary shaft (21); a cam (23) that rotates together with the rotary shaft (21); a first engagement portion forming member (25) provided with a plurality of first engagement portions (24) that is provided in the energy absorbing plate (35), the first engagement portions (24) being separated from each other in the relative movement direction; and a second engagement portion forming member (27) that is provided with at least one second engagement portion (26), and is pressed by the cam (23) such that the second engagement portion (26) is engaged with the corresponding first engagement portion (24); the energy absorbing plate (35) may have a restriction hole (39) which communicates with one end (38a) of the slit (38), through which the first drawing shaft (32) is inserted, and which restricts relative movement of the energy absorbing plate (35) and the first drawing shaft (32) in the relative movement direction; and the first engagement portion forming member (25) and the energy absorbing plate (35) may be integrally formed of a single member such that the first engagement portion forming member (25) extends from the restriction hole (39) of the energy absorbing plate (35) toward a side opposite to the slit (38).

According to the above aspect, the second engagement portion forming member that extends from the energy absorbing plate constitutes a part of the lock mechanism. Thus, the structure can be simplified. The first drawing shaft is inserted through the restriction hole provided at the one end of the slit in the energy absorbing plate, and thus relative movement of the energy absorbing plate and the upper jacket is restricted.

In the above aspect, when telescopic adjustment is performed in a telescopic lock canceled state in which engagement between the first engagement portion (24) and the second engagement portion (26) is canceled, the energy absorbing plate (35), in which the first drawing shaft (32) is engaged with the restriction hole (39), and the first engagement portion forming member (25) integral with the energy absorbing plate (35) may move together with the upper jacket (11).

According to the above aspect, the energy absorbing plate and the upper jacket move together with each other in the telescopic lock canceled state, and thus the telescopic adjustment is performed.

In the above aspect, in a locked state in which the first engagement portion (24) and the second engagement portion (26) are engaged, the first drawing shaft (32) may move together with the upper jacket (11) relative to the energy absorbing plate (35) during the secondary collision such that the first drawing shaft (32) moves relative to the slit (38) in a direction in which the slit (38) extends and the shock absorbing load is generated.

According to the above aspect, when the secondary collision occurs in the telescopic lock state, the first drawing shaft, which moves together with the upper jacket, and the slit of the energy absorbing plate move relative to each other. Thus, the shock absorbing load is generated.

In the above aspect, the energy absorbing member may include an energy absorbing wire (60; 60B) including: a locked portion (61) as the relative position fixed portion that is locked by a pressing member (95), the pressing member (95) moving together with the upper jacket (11) during the secondary collision; a first folded portion (63) that is folded in the relative movement direction and is engaged with the unadjusted shaft (71) such that the first folded portion (63) is drawn during the secondary collision; and a second folded portion (65; 65B) that is folded in an opposite direction as compared to the first folded portion (63) and is engaged with the adjusted shaft (72; 72B) that is at an engaged position such that the second folded portion (65; 65B) is drawn during the secondary collision; the adjusted shaft (72; 72B) may be displaceable in the drawing shaft direction to the engaged position where the adjusted shaft (72; 72B) is engaged with the second folded portion (65; 65B) and to a disengaged position where the adjusted shaft (72; 72B) is not engaged with the second folded portion (65; 65B); and the drive element (33) may drive the adjusted shaft (72; 72B) in the drawing shaft direction to switch between a state in which the unadjusted shaft (71) is engaged with the first folded portion (63) to draw the first folded portion (63) and the adjusted shaft (72; 72B) is engaged with the second folded portion (65; 65B) to draw the second folded portion (65; 65B) during the secondary collision such that the energy absorbing wire (60; 60B) is drawn, and a state in which only the unadjusted shaft (71) is engaged with the first folded portion (63) to draw the first folded portion (63) during the secondary collision such that the energy absorbing wire (60; 60B) is drawn.

According to the above aspect, the number of the second drawing shafts drawing the energy absorbing wire during the secondary collision is variable. Thus, the shock absorbing load during the secondary collision is variable. In other words, the shock absorbing load is adjusted by switching between a state in which the unadjusted shaft and the adjusted shaft as the second drawing shafts draw the corresponding folded portions during the secondary collision and a state in which only the unadjusted shaft draws the first folded portion during the secondary collision.

In the above aspect, when the upper jacket (11) moves relative to the lower jacket (12) such that telescopic adjustment is performed, the upper jacket (11) may move relative to the energy absorbing wire (60; 60B) and the pressing member (95) in the relative movement direction, a position of the energy absorbing wire (60; 60B) relative to the lower jacket (12) being fixed via the second drawing shafts (71, 72; 71, 72B), and the pressing member (95) locking the locked portion (61) of the energy absorbing wire (60; 60B).

According to the above aspect, the upper jacket moves relative to the energy absorbing wire and the pressing member, and thus telescopic adjustment is performed.

In the above aspect, the locked portion (61) of the energy absorbing wire (60; 60B) may move together with the upper jacket (11) and the pressing member (95) relative to at least the unadjusted shaft (71) among the second drawing shafts (71, 72; 71, 72B) during the secondary collision such that the energy absorbing wire is drawn by at least the unadjusted shaft (71) and the shock absorbing load is generated.

According to the above aspect, the locked portion that functions as the relative position fixed portion of the energy absorbing wire moves together with the upper jacket during the secondary collision. Accordingly, the energy absorbing wire is drawn by at least the unadjusted shaft and thus the shock absorbing load is generated.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a schematic side view of a main portion of a steering system in the first embodiment of the present invention;
FIG. 2 is a schematic sectional view of the steering system according to the first embodiment and corresponds to a section taken along line II-II in FIG. 1;
FIG. 3 is a schematic exploded perspective view of the main portion of the steering system in the first embodiment;
FIG. 4 is a plan view of an energy absorbing plate of a shock absorbing mechanism, in which a first engagement portion forming member as a part of a telescopic lock mechanism is integrally formed in the first embodiment;
FIG. 5 is a perspective view of a second engagement portion forming member of the telescopic lock mechanism in the first embodiment and is a view in which the second engagement portion forming member is seen obliquely from below;
FIG. 6A and FIG. 6B are sectional views of a main portion of the shock absorbing mechanism in the first embodiment, FIG. 6A is a sectional view taken along line VI-VI in FIG. 5 and shows a state in which a first drawing portion that is a larger diameter side of a first drawing shaft is inserted through a restriction hole of the energy absorbing plate, and FIG. 6B shows a state in which a second drawing portion that is a smaller diameter side of the first drawing shaft is inserted through the restriction hole of the energy absorbing plate;
FIG. 7 is a schematic sectional view of the main portion of the steering system in a telescopic lock canceled state in the first embodiment;
FIG. 8 is a schematic sectional view of the main portion of the steering system when the upper jacket is displaced in a telescopic direction in the telescopic lock canceled state in FIG. 7 and thus telescopic adjustment is performed;
FIG. 9 is a schematic sectional view of the main portion of the steering system and shows a state in which an operation lever is operated at a position after the telescopic adjustment is performed in FIG. 8 and the telescopic lock is achieved;
FIG. 10 is a schematic sectional view of the main portion of the steering system when a pyro switch remains OFF and the first drawing portion of the first drawing shaft draws a slit in a first case where a shock is small during the secondary collision in the telescopic lock state in FIG. 9;
FIG. 11 is a schematic sectional view of the main portion of the steering system and shows a state in which the pyro switch is turned ON, the first drawing shaft is driven in an axial direction, and the second drawing portion of the first drawing shaft is inserted through the restriction hole in a second case where the shock is large during the secondary collision in the telescopic lock state in FIG. 9;
FIG. 12 is a schematic sectional view of the main portion of the steering system when the second drawing portion of the first drawing shaft draws the slit in the second case where the shock is large during the secondary collision in FIG. 11;
FIG. 13 is a schematic sectional view of a main portion of a steering system in a second embodiment of the present invention;
FIG. 14 is a schematic sectional view of the steering system of the second embodiment and corresponds to a schematic sectional view taken along line XIV-XIV in FIG. 13;
FIG. 15 is a schematic perspective view of the main portion of the steering system in the second embodiment;
FIG. 16 is a schematic plan view of a main portion of a shock absorbing mechanism in the second embodiment;
FIG. 17 is a schematic plan view of the main portion of the shock absorbing mechanism and shows a state in which both of an adjusted shaft and an unadjusted shaft as second drawing shafts draw an energy absorbing wire during the secondary collision in the second embodiment;
FIG. 18 is a schematic plan view of the main portion of the shock absorbing mechanism and shows a state in which only the unadjusted shaft as the second drawing shaft draws the energy absorbing wire during the secondary collision in the second embodiment; and
FIG. 19 is a schematic perspective view of a main portion of a shock absorbing mechanism according to a third embodiment of the present invention.

### DETAILED DESCRIPTION OF EMBODIMENTS

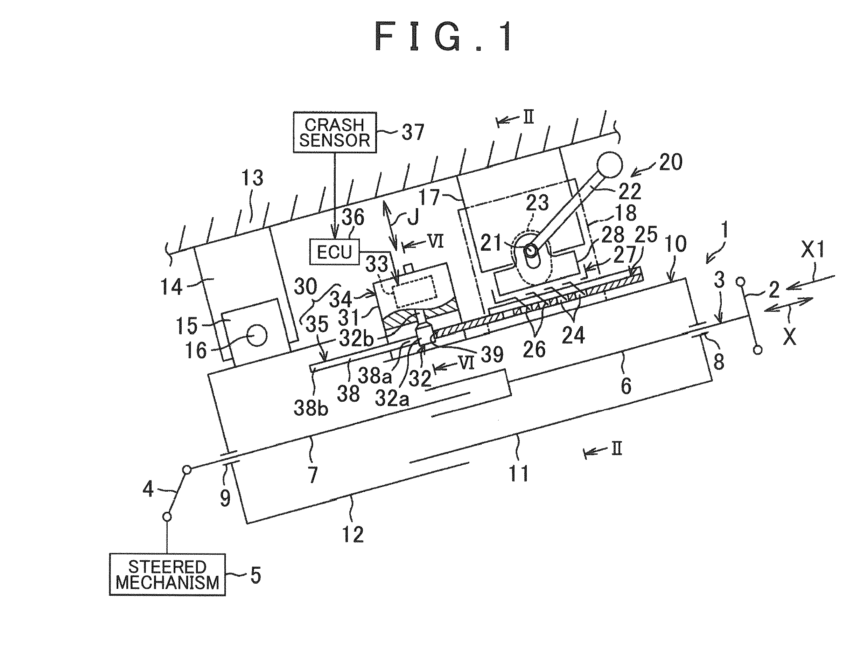

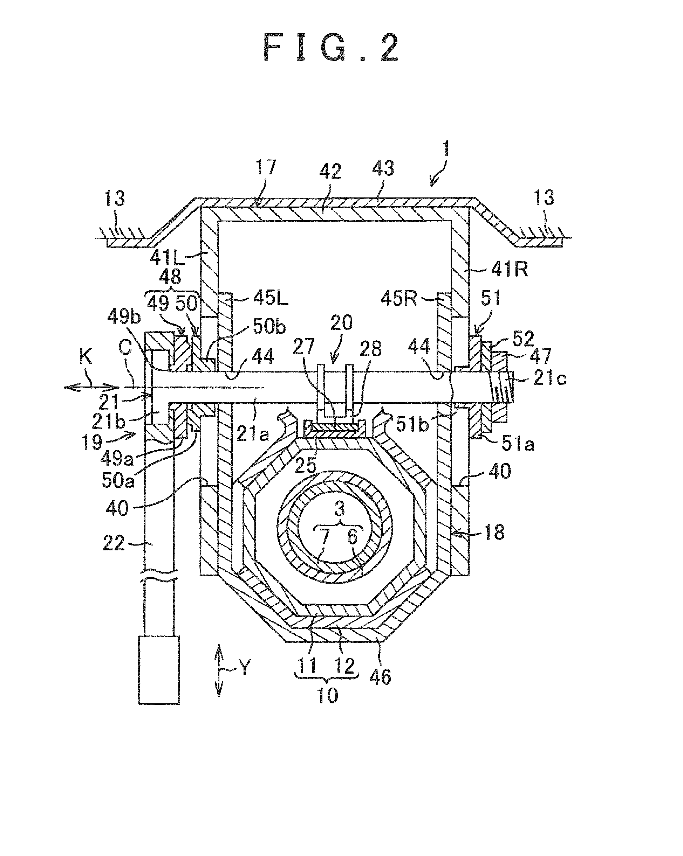

A description will be made on embodiments of the present invention with reference to the accompanying drawings. FIG. 1 is a schematic side view of a schematic configuration of a steering system in the first embodiment of the present invention. FIG. 2 is a schematic cross-sectional view of the steering system. Referring to FIG. 1, a steering system 1 includes: a steering shaft 3, one end of which is coupled to a steering member 2 such as a steering wheel; and a steered mechanism 5, to which rotation of the steering member 2 is transferred via the steering shaft 3 and an intermediate shaft 4, and which steers steered wheels (not shown) in accordance with the rotation of the steering member 2.

As the steered mechanism 5, a rack and pinion mechanism is used, for example. The rotation transferred to the steered mechanism 5 is converted to axial movement of a rack shaft, which is not shown. In this way, the steered wheels are steered. The steering shaft 3 includes a cylindrical upper shaft 6 and a cylindrical lower shaft 7 that are fitted to each other to be slidable relative to each other in an axial direction X (a telescopic direction) by spline fitting or serration fitting, for example. The steering shaft 3 is extendable and contractable when the upper shaft 6 slides relative to the lower shaft 7 in the axial direction X. The steering member 2 is coupled to an end of the upper shaft 6 such that the steering member 2 and the upper shaft 6 rotate together with each other.

The steering system 1 also includes a hollow steering column 10 that supports the steering shaft 3 via a plurality of bearings 8, 9 such that the steering shaft 3 is rotatable. The steering column 10 includes an upper jacket 11 on an inner side and a lower jacket 12 on an outer side that are fitted to each other to be slidable relative to each other in the axial direction X (the telescopic direction). The steering column 10 is extendable and contractable when the upper jacket 11 slides relative to the lower jacket 12 in the axial direction X.

The upper jacket 11 supports the upper shaft 6 via the bearing 8 such that the upper shaft 6 is rotatable. In addition, the upper jacket 11 is coupled to the upper shaft 6 via the bearing 8 so as to be movable together with the upper shaft 6 in the axial direction X of the steering shaft 3 (the telescopic direction). The steering system 1 includes: a lower side fixed bracket 14 that is fixed to a vehicle body 13; a lower side column bracket 15 that is fixed to the lower jacket 12 such that the lower side column bracket 15 is movable together with lower jacket 12; and a tilt center shaft 16 that couples the column bracket 15 to the fixed bracket 14 such that the column bracket 15 is rotatable. Accordingly, the steering column 10 and the steering shaft 3 can be rotated (tilted) about the tilt center shaft 16 (with the tilt center shaft 16 serving as a fulcrum point).

A position of the steering member 2 can be adjusted by rotating (tilting) the steering column 10 and the steering shaft 3 about the tilt center shaft 16 (i.e., so-called tilt adjustment is performed). The position of the steering member 2 can also be adjusted by extending or contracting the steering shaft 3 and the upper jacket 11 in the axial direction X (the telescopic direction) (so-called telescopic adjustment is performed).

The steering system 1 includes: an upper side fixed bracket 17 that is fixed to the vehicle body; and an upper side column bracket 18 that is provided to be integrated with the lower jacket 12. As shown in FIG. 2, the column bracket 18 may be provided as a member separate from the lower jacket 12 and fixed to the lower jacket 12. Alternatively, although not shown, the column bracket 18 and the lower jacket 12 may be formed of a single material, and thus may be provided as one unit.

As shown in FIG. 2, the steering system 1 includes a tilt lock mechanism 19 (not shown in FIG. 1) that locks/unlocks a tilt position of the lower jacket 12 of the steering column 10. In addition, as shown in FIG. 1 and FIG. 2, the steering system 1 includes a telescopic lock mechanism 20 that locks/unlocks a position in the axial direction X (a telescopic position) of the upper jacket 11 relative to the lower jacket 12 of the steering column 10.

Furthermore, as shown in FIG. 1, the steering system 1 includes a shock absorbing mechanism 30 that absorbs a shock in conjunction with movement of the upper jacket 11 relative to the lower jacket 12 in a downward axial direction X1 (corresponding to a relative movement direction of both of the jackets 11, 12 during the secondary collision) during a secondary collision. As shown in FIG. 1, the telescopic lock mechanism 20 includes: the fixed bracket 17; a rotary shaft 21 rotatably supported by the fixed bracket 17; an operation lever 22 that rotates together with the rotary shaft 21; and a cam 23 for telescopic lock that rotates together with the rotary shaft 21.

The telescopic lock mechanism 20 also includes: a first engagement portion forming member 25 provided with a plurality of first engagement portions 24 that is, for example, a plurality of engagement holes, the first engagement portions 24 being aligned in the relative movement direction of both of the jackets 11, 12; and a second engagement portion forming member 27 provided with at least one second engagement portion 26 that is at least one engagement projection engaged with the first engagement portion 24 (in the embodiment, a plurality of second engagement portions 26 is provided). The telescopic lock mechanism 20 further includes a pressing member 28 that is interposed between the cam 23 and the second engagement portion forming member 27 and presses the second engagement portion forming member 27 toward the first engagement portion forming member 25 by being pressed by the cam 23.

The first engagement portion forming member 25 and an energy absorbing plate 35 included in the shock absorbing mechanism 30 are integrally formed of a single member. During a normal time when the secondary collision does not occur, a position of the energy absorbing plate 35 relative to the upper jacket 11 in the axial direction X (the telescopic direction) is fixed. When a driver rotationally operates the operation lever 22 in a locking direction, the cam 23 that rotates together with the operation lever 22 and the rotary shaft 21 presses the second engagement portion forming member 27 toward the first engagement portion forming member 25 via the pressing member 28. Accordingly, the second engagement portions 26 (the engagement projections) are engaged with the first engagement portions 24 (the engagement holes). Thus, the telescopic lock is achieved.

When the driver rotationally operates the operation lever 22 in an unlocking direction, the cam 23 stops pressing the second engagement portion forming member 27. Then, a distance of the second engagement portion forming member 27 from the first engagement portion forming member 25 is increased by an operation of an urging mechanism, which is not shown in FIG. 1. In this way, the second engagement portions 26 (the engagement projections) are disengaged from the first engagement portions 24 (the engagement holes), and thus the telescopic lock is canceled.

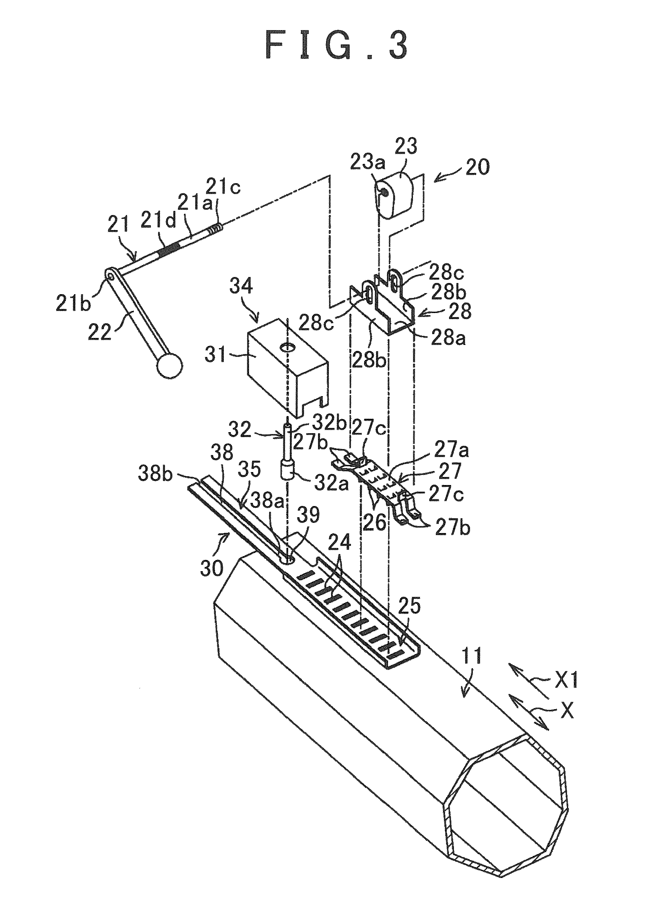

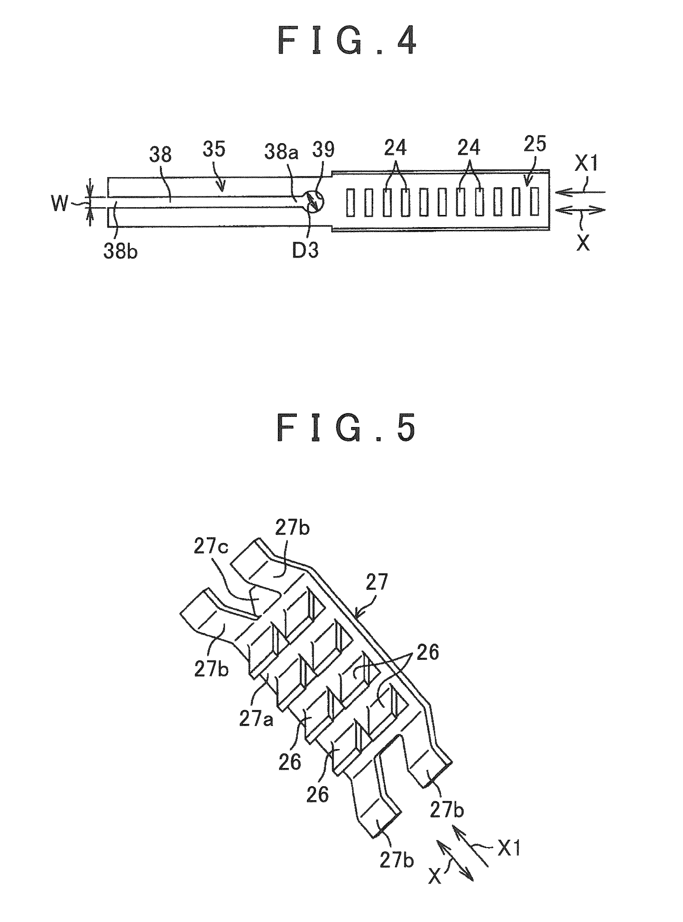

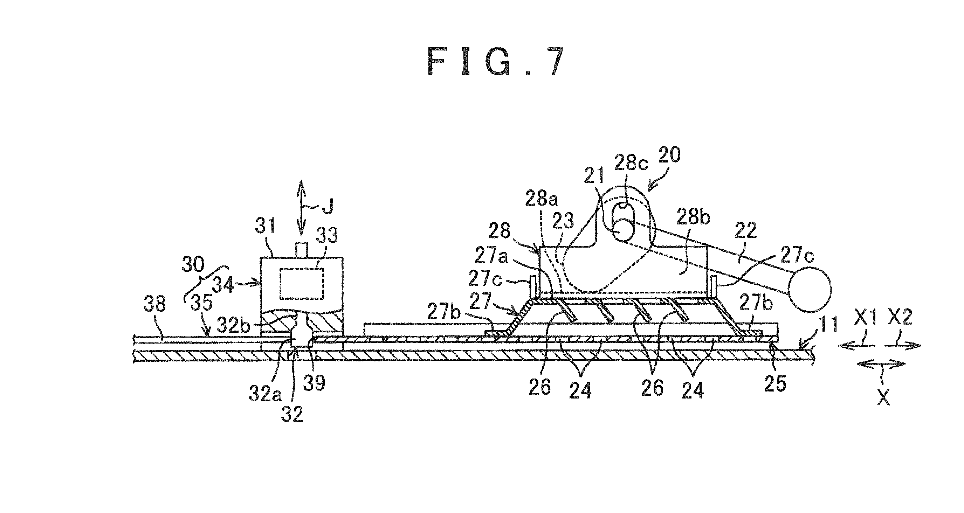

As shown in FIG. 3 and FIG. 5, the second engagement portion forming member 27 includes: a main body 27a with a rectangular plate shape; the plurality of second engagement portions 26 that is the plurality of engagement projections that extends obliquely downward from the main body 27a; urging portions 27b that are constituted by elastic legs that extend obliquely downward from four corners of the main body 27a; and paired positioning portions 27c that extend upward from ends of the main body 27a in a longitudinal direction. Each second engagement portion 26 is an elastic tongue piece that is cut out and raised from an edge of a corresponding opening formed in the main body 27a. As shown in FIG. 7, each urging portion 27b is received by the first engagement portion forming member 25. The urging portion 27b urges in a direction to increase a distance between the main body 27a and the first engagement portion forming member 25. In other words, the urging portion 27b urges in a direction to separate the second engagement portions (the engagement projections) from the first engagement portions 24 (the engagement holes), so as to cancel the telescopic lock.

The paired positioning portions 27c restrict relative movement of the second engagement portion forming member 27 and the pressing member 28 in the axial direction X by engaging with corresponding ends of the pressing member 28. As shown in FIG. 3, the pressing member 28 includes: a main body 28a with a rectangular plate shape that faces the main body 27a of the second engagement portion forming member 27; and paired side plates 28b that extend upward from the main body 28a. Each of the paired side plates 28b has a vertically elongated insertion hole 28c through which a shaft portion 21a of the rotary shaft 21 is rotatably inserted. The main body 28a of the pressing member 28 presses the main body 27a of the second engagement portion forming member 27 toward the first engagement portion forming member 25.

The shaft portion 21a of the rotary shaft 21 is inserted in the insertion holes 28c of the paired side plates 28b and an insertion hole 23a provided in the cam 23 in a state in which the cam 23 is arranged between the paired side plates 28b. A male spline 21 d that is formed in the shaft portion 21 a of the rotary shaft 21 is spline-fitted to a female spline (not shown) that is provided in the insertion hole 23a of the cam 23. In this way, the rotary shaft 21 and the cam 23 rotate together with each other.

As shown in FIG. 7, the paired ends of the main body 28a in the axial direction X are respectively engaged with the corresponding positioning portions 27c of the second engagement portion forming member 27, and thus the relative movement of the second engagement portion forming member 27 and the pressing member 28 in the axial direction X is restricted. As shown in FIG. 1, the shock absorbing mechanism 30 includes: a drawing unit 34 including a unit main body 31, a first drawing shaft 32 supported by the unit main body 31, and a drive element 33 that drives the first drawing shaft 32; and the energy absorbing plate 35 as an energy absorbing member that is drawn by the first drawing shaft 32, is then plastically deformed, and thereby absorbs shock energy during the secondary collision.

The unit main body 31 is fixed to the upper jacket 11. The first drawing shaft 32 is supported by the unit main body 31 and displaceable in a drawing shaft direction J that intersects with a moving direction of the upper jacket 11 (the axial direction X). The first drawing shaft 32 includes, for example, a first drawing portion 32a and a second drawing portion 32b as a plurality of drawing portions with different outside diameters. The first drawing portion 32a and the second drawing portion 32b are separated from each other in the drawing shaft direction J.

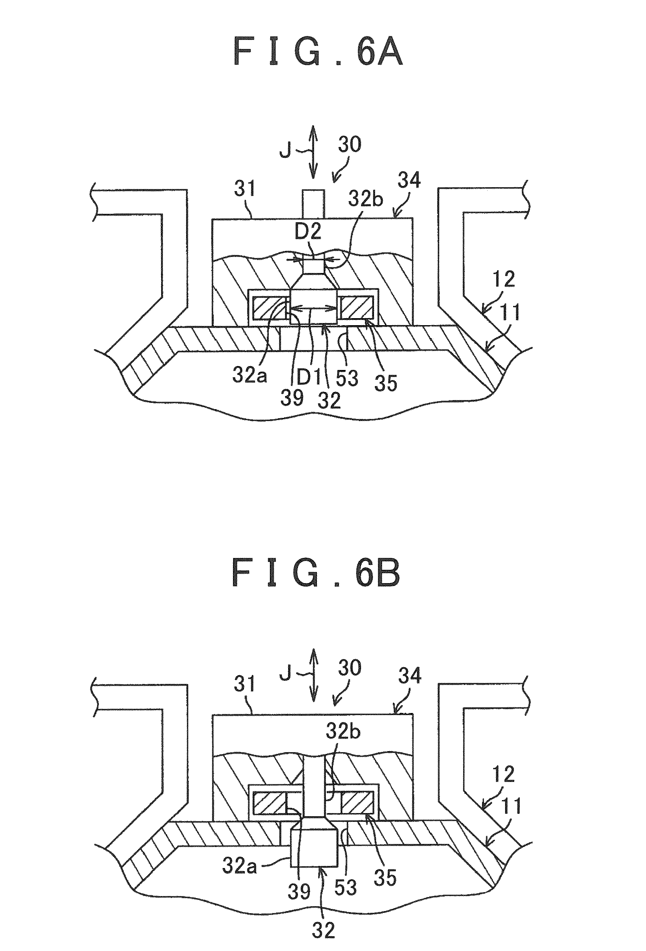

As shown in FIG. 6A, an outside diameter D1 of the first drawing portion 32a is set to be larger than an outside diameter D2 of the second drawing portion 32b (D1 > D2). As shown in FIG. 1, the unit main body 31 is fixed to the upper jacket 11. Thus, the entire drawing unit 34 including the first drawing shaft 32 moves together with the upper jacket 11 during the secondary collision.

The drive element 33 is housed in the unit main body 31 and drives the first drawing shaft 32 in the drawing shaft direction J. More specifically, the drive element 33 is a firing device that is operated by lighting off gunpowder. In other words, the drawing unit 34 is a pyrotechnical switch (hereinafter also referred to as a pyro switch) and is connected to an electronic control unit (ECU) 36. The ECU 36 is connected to a crash sensor 37 that detects a collision of the vehicle. The ECU 36 supplies current to the drive element 33 based on signal input from the crash sensor 37, thereby lighting off the gunpowder.

As shown in FIG. 1, FIG. 3, and FIG. 4, the energy absorbing plate 35 includes a slit 38 that extends in a moving direction X1 in which the upper jacket 11 moves during the secondary collision (corresponding to the relative movement direction in which the upper jacket 11 and the lower jacket 12 move relative to each other during the secondary collision). The slit 38 has a first end 38a as a base end and a second end 38b as an open distal end. The energy absorbing plate 35 includes a restriction hole 39 that communicates with the first end 38a of the slit 38 and to which the first drawing shaft 32 is inserted.

The first engagement portion forming member 25 of the telescopic lock mechanism 20 is constituted by an extension portion that extends from the energy absorbing plate 35, that is, from the restriction hole 39 of the energy absorbing plate 35 toward the side opposite to the slit 38. When the secondary collision occurs in the telescopic lock state, the slit 38 functions as a relative position fixed portion whose position relative to the lower jacket 12 is fixed. As shown in FIG. 4, an inside diameter D3 of the restriction hole 39 is set to be larger than the outside diameter D1 of the first drawing portion 32a, which is the larger diameter side of the first drawing shaft 32 (see FIG. 6A). That is, a relationship of D3 > D1 > D2 is established. A width W of the slit 38 (a width in a direction that is orthogonal to an extending direction of the slit 38 and a thickness direction of the energy absorbing plate 35) is set to be smaller than the outside diameter D2 of the second drawing portion 32b (see FIG. 6A). That is, a relationship of W < D2 < D1 is established.

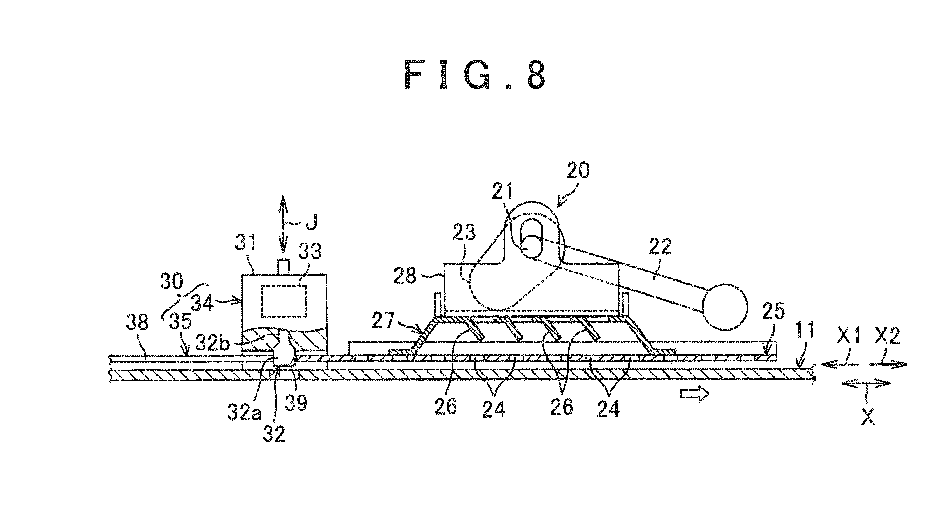

As shown in FIG. 6A and FIG. 7, during the normal time when a collision does not occur, the first drawing portion 32a that is the larger diameter side of the first drawing shaft 32 is inserted through the restriction hole 39. Thus, during the normal time, the position of each of the upper jacket 11, the drawing unit 34, and the energy absorbing plate 35 in the relative movement direction is fixed relative to the others. As shown in FIG. 7 and FIG. 8, in a state in which the telescopic lock is canceled (that is, in a state in which the first engagement portions 24 and the second engagement portions 26 are disengaged from each other), the first engagement portion forming member 25 that is integrated with the energy absorbing plate 35 can move together with the upper jacket 11 in the axial direction X (the telescopic direction). For example, the upper jacket 11 moves in an upward axial direction X2 from a state shown in FIG. 7 and is subject to the telescopic adjustment, so as to be shifted to a state shown in FIG. 8.

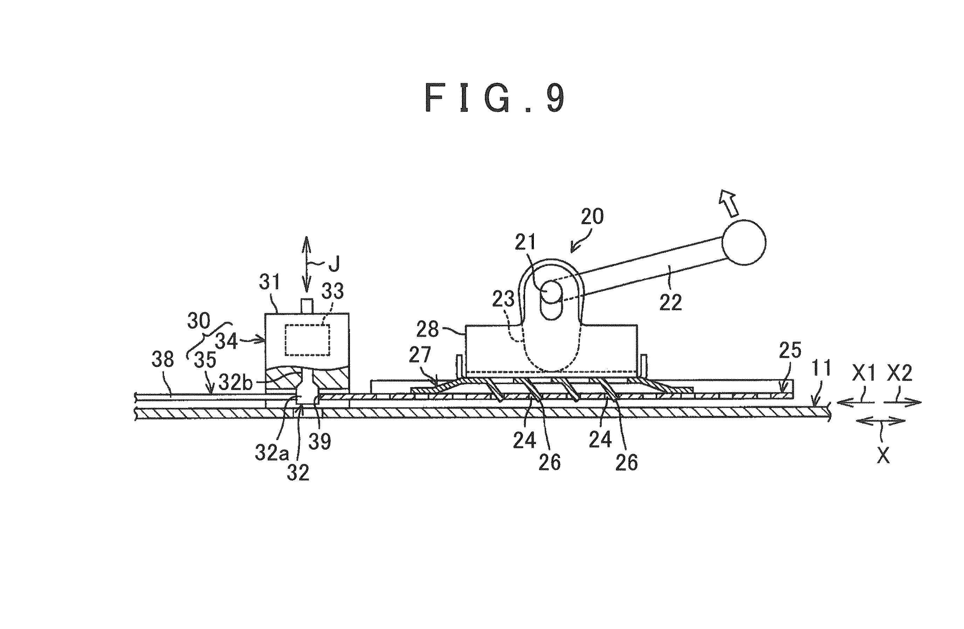

When the operation lever 22 is rotationally operated in the locking direction in the state shown in FIG. 8, the first engagement portions 24 and the second engagement portions 26 are engaged with each other. Then, as shown in FIG. 9, the position of the upper jacket 11 in the axial direction X is fixed, and the telescopic lock is achieved. If the secondary collision occurs in the telescopic lock state shown in FIG. 9, the ECU 36 selectively carries out operations in a first case and a second case, which will be described below.

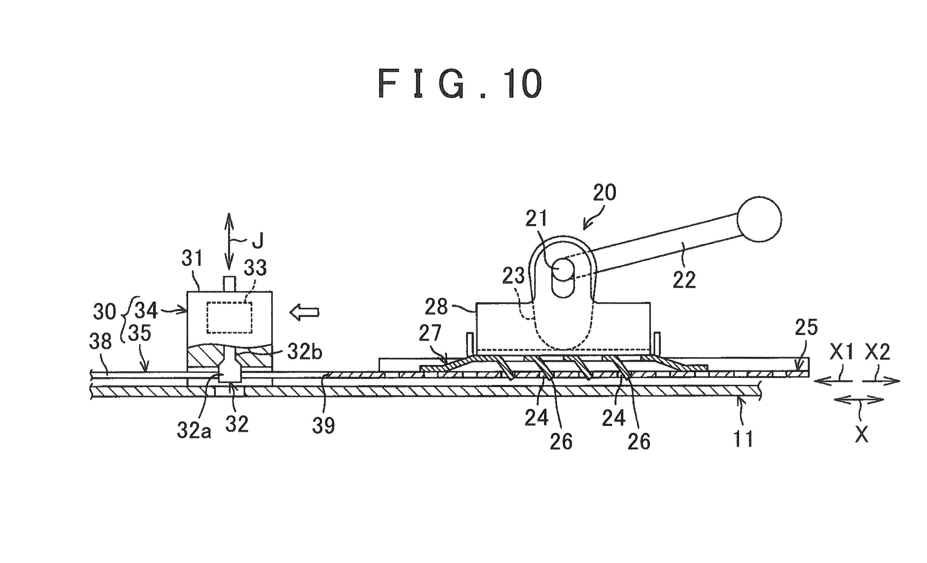

More specifically, the ECU 36 does not operate the firing device, which is the drive element 33, in the first case where a value detected by the crash sensor 37 exceeds a specified value during the secondary collision (corresponding to a case where the shock during the secondary collision is large). Accordingly, in the first case during the secondary collision, as shown in FIG. 10, the first drawing portion 32a on the larger diameter side that moves in the downward axial direction X1 draws the slit 38 in a state in which the pyro switch is OFF. Thus, the energy absorbing plate 35 is plastically deformed, and a first shock absorbing load can thereby be obtained.

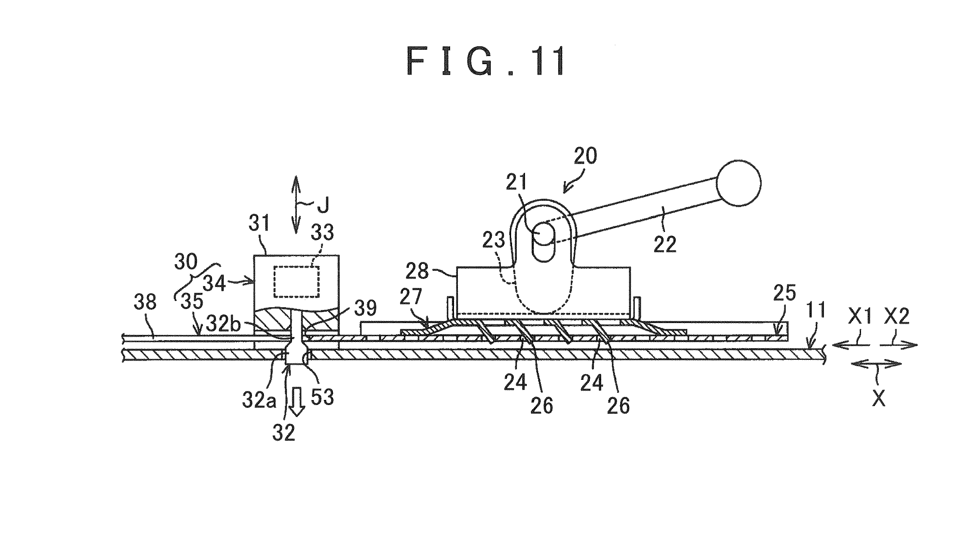

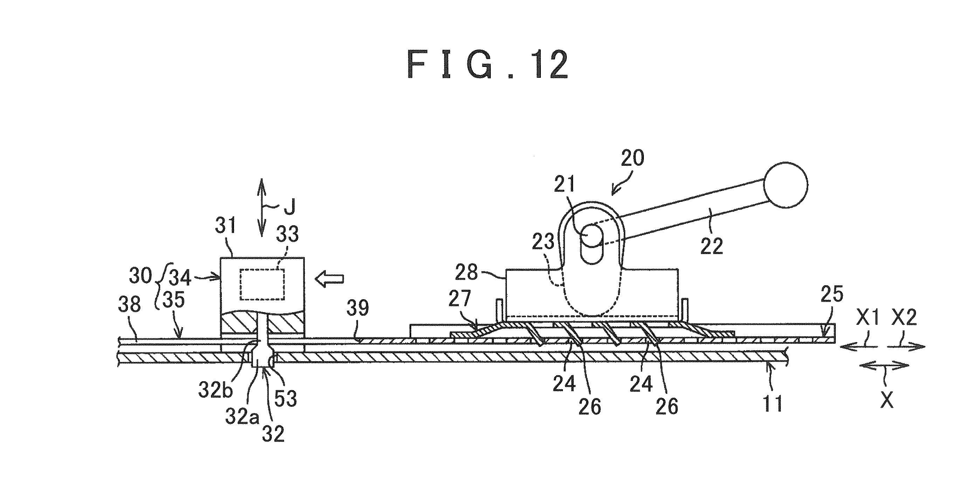

Meanwhile, the ECU 36 operates the firing device, which is the drive element 33, in the second case where the value detected by the crash sensor 37 is equal to or smaller than the specified value during the secondary collision (corresponding to a case where the shock during the secondary collision is small). Thus, as shown in FIG. 11, the first drawing shaft 32 is driven in the drawing shaft direction J, and accordingly, the second drawing portion 32b on a smaller diameter side is inserted through the restriction hole 39. Accordingly, in the second case during the secondary collision, as shown in FIG. 12, the second drawing portion 32b on the smaller diameter side that moves in the downward axial direction X1 draws the slit 38 in a state in which the pyro switch is ON. Thus, the energy absorbing plate 35 is plastically deformed, and it is possible to obtain a second shock absorbing load that is lower than the first shock absorbing load obtained in the first case.

Again, referring to FIG. 2, the fixed bracket 17 is a groove-shaped member that is opened downward, and is formed symmetrically. More specifically, the fixed bracket 17 includes paired fixed side plates 41L, 41R, each of which has an elongated hole for tilting 40, and a coupling plate 42 that couples ends (upper ends in FIG. 2) of the paired fixed side plates 41L, 41R. An attachment stay 43 that is fixed to the vehicle body 13 by a fixing bolt (not shown) is fixed to an upper surface of the coupling plate 42.

The column bracket 18 is a groove-shaped member that is opened upward, and is formed symmetrically. More specifically, the column bracket 18 includes paired column side plates 45L, 45R, each of which has a rotary shaft insertion hole 44 formed as a circular hole, and a coupling plate 46 that couples ends (lower ends in FIG. 2) of the paired column side plates 45L, 45R. The coupling plate 46 may be formed to have a polygonal cross section that extends along a contour shape of the lower jacket 12 having a polygonal cross section, for example.

A partial structure of the tilt lock mechanism 19 constitutes a partial structure of the telescopic lock mechanism 20. More specifically, the tilt lock mechanism 19 includes: the rotary shaft 21 that is inserted through the elongated holes for tilting 40 of the fixed side plates 41L, 41R and the rotary shaft insertion holes 44 of the column side plates 45L, 45R; and the operation lever 22 that rotates together with the rotary shaft 21. The rotary shaft 21 is constituted by a bolt that has: the shaft portion 21a, a head portion 21b provided at one end of the shaft portion 21a, and a screw portion 21c provided at the other end of the shaft portion 21a. One end of the operation lever 22 is fixed to the head portion 21b of the rotary shaft 21 such that the operation lever 22 is rotatable together with the rotary shaft 21.

In addition, the tilt lock mechanism 19 includes, a nut 47 that is screwed to the screw portion 21c of the rotary shaft 21, a rotary cam 49, and a non-rotary cam 50. The rotary cam 49 and the non-rotary cam 50 are fitted to an outer periphery of the shaft portion 21a in the vicinity of the head portion 21b of the rotary shaft 21 and constitute a cam mechanism 48. The rotary cam 49 is coupled to the operation lever 22 such that the rotary cam 49 is rotatable together with the operation lever 22. The rotary cam 49 includes an annular plate 49a and a boss 49b. The non-rotary cam 50 includes an annular plate 50a that faces the annular plate 49a of the rotary cam 49, and a boss 50b.

The boss 50b of the non-rotary cam 50 is inserted through the elongated hole for tilting 40 of the one fixed side plate 41L, and thus the rotation of the non-rotary cam 50 is restricted by the elongated hole for tilting 40. The non-rotary cam 50 can slide relative to the shaft portion 21a of the rotary shaft 21 in an axial direction K of the rotary shaft 21. A cam projection is provided in at least one of opposing surfaces of the annular plate 49a of the rotary cam 49 and the annular plate 50a of the non-rotary cam 50. The cam projection is engaged with a cam surface provided in the other of the annular plate 49a of the rotary cam 49 and the annular plate 50a of the non-rotary cam 50 that is not provided with the cam projection. Due to an action achieved by the cam projection and the cam surface, the rotation of the rotary cam 49 is converted to axial movement of the non-rotary cam 50. The non-rotary cam 50 functions as a fastening member that fastens the one fixed side plate 41L to the corresponding column side plate 45L.

Furthermore, the tilt lock mechanism 19 includes a fastening member 51 and a thrust bearing 52. The fastening member 51 is fitted to the outer periphery of the shaft portion 21a in the vicinity of the other end of the shaft portion 21a of the rotary shaft 21, extends along an outer surface of the other fixed side plate 41R, and is movable and is guided by the elongated hole for tilting 40. The thrust bearing 52 is interposed between the fastening member 51 and the nut 47. The fastening member 51 includes an annular plate 51a that extends along the outer surface of the other fixed side plate 41R, and a boss 51b. The boss 51b of the fastening member 51 is fitted into the elongated hole for tilting 40 of the other fixed side plate 41R and thus is restricted from rotating. The fastening member 51 performs the function of fastening the other fixed side plate 41R to the corresponding column side plate 45R during the tilt lock.

When the rotary shaft 21 rotates in accordance with the rotational operation of the operation lever 22 in the locking direction, the rotary cam 49 causes the non-rotary cam 50 to move toward the one fixed side plate 41L of the fixed bracket 17. Thus, the non-rotary cam 50 and the fastening member 51 hold and fasten the paired fixed side plates 41L, 41R of the fixed bracket 17 therebetween from the outer side. As a result, the paired fixed side plates 41L, 41R of the fixed bracket 17 respectively hold the corresponding column side plates 45L, 45R of the column bracket 18. Thus, the paired fixed side plates 41L, 41R are respectively brought into press-contact with the corresponding column side plates 45L, 45R. Thus, the tilt lock is achieved.

When tilt adjustment is performed in a state in which the tilt lock is canceled, the non-rotary cam 50 (the fastening member) and the fastening member 51 are respectively guided in a tilt direction Y by the elongated holes for tilting 40 of the corresponding fixed side plates 41L, 41R. The shaft portion 21a of the rotary shaft 21 is inserted through the rotary shaft insertion holes 44 that are formed as the circular holes of the column side plates 45L, 45R. Thus, the column bracket 18 integrated with the lower jacket 12 moves together with the rotary shaft 21 in the tilt direction Y during the tilt adjustment.

According to the first embodiment, the diameter of the first drawing shaft 32 that draws the energy absorbing member (the energy absorbing plate 35) during the secondary collision is variable. The shock absorbing load can be adjusted only at the drawing position between the first drawing shaft 32 and the energy absorbing member (the energy absorbing plate 35). Thus, the shock absorbing load can be adjusted by a simple structure. More specifically, the energy absorbing plate 35 having the slit 38 is used as the energy absorbing member. One of the plurality of drawing portions with the different outside diameters of the first drawing shaft 32 (the first drawing portion 32a and the second drawing portion 32b) draws the slit 38 of the energy absorbing plate 35, thereby adjusting the shock absorbing load during the secondary collision (see FIG. 10 in which the first drawing portion 32a draws the slit 38 and FIG. 12 in which the second drawing portion 32b draws the slit 38). The shock absorbing loads that are obtained using the drawing portions 32a, 32b can be tuned independently from each other by changing each of the outside diameters D1, D2 of the drawing portions 32a, 32b. Thus, the shock absorbing load can be set finely.

The first engagement portion forming member 25 that constitutes a portion of the telescopic lock mechanism 20 and the energy absorbing plate 35 of the shock absorbing mechanism 30 are integrally formed of the single member. Thus, the structure can be simplified. In addition, during the normal time when the secondary collision does not occur, the first drawing shaft 32 that is supported by the unit main body 31 fixed to the upper jacket 11 is inserted through the restriction hole 39 that is provided at the one end of the slit 38 in the energy absorbing plate 35. Thus, the telescopic adjustment can be performed by moving the energy absorbing plate 35, the first engagement portion forming member 25, and the upper jacket 11 together with each other in the axial direction X (see FIG. 7 and FIG. 8) during the normal time in the state in which the telescopic lock is canceled.

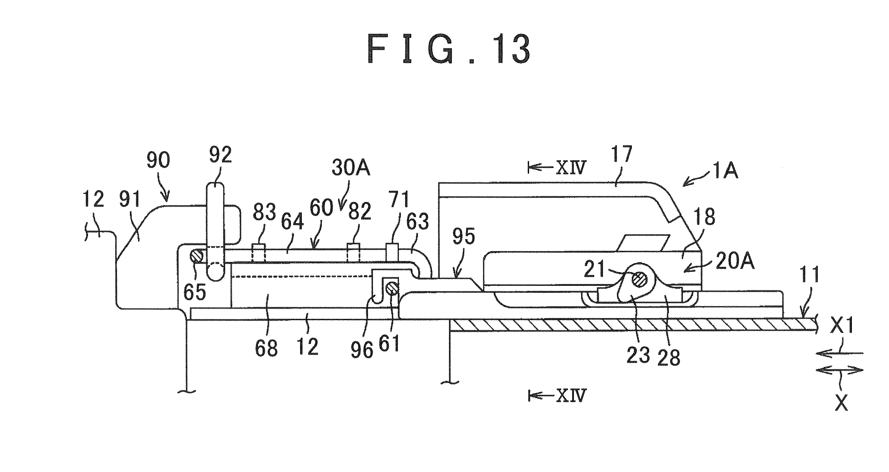

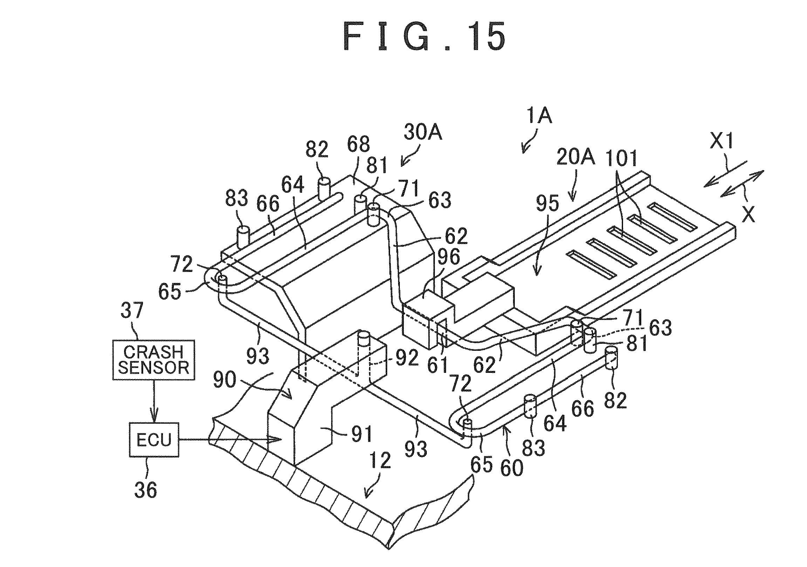

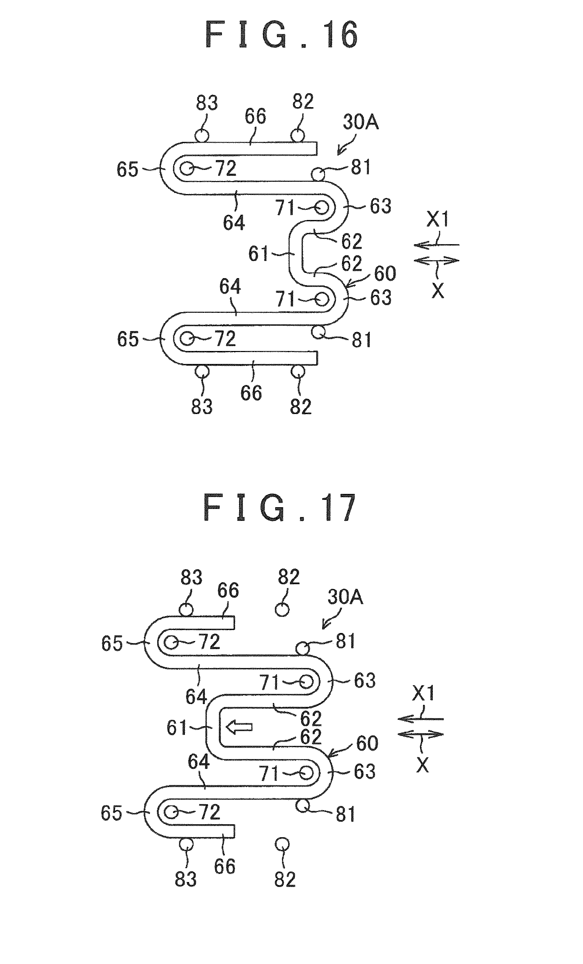

When the secondary collision occurs in the telescopic lock state, the first drawing shaft 32 that moves together with the upper jacket 11 draws the slit 38 of the energy absorbing plate 35 (corresponding to the relative position fixed portion whose position relative to the lower jacket 12 is fixed) in the extending direction of the slit 38 (i.e., the direction in which the slit 38 extends). Accordingly, the shock absorbing load can be generated (see FIG. 10 and FIG. 12). Next, FIG. 13 to FIG. 18 show a steering system 1A of a second embodiment of the present invention. The steering system 1A of the second embodiment mainly differs from the steering system 1 of the first embodiment in the following points. As shown in FIG. 15, an energy absorbing wire 60 is used as the energy absorbing member in a shock absorbing mechanism 30A of the steering system 1A. As shown in FIG. 15 and FIG. 16, the energy absorbing wire 60 includes: a locked portion 61 as the relative position fixed portion whose position relative to the upper jacket 11 is fixed during the secondary collision; paired first portions 62 that linearly extend from the locked portion 61 toward both sides; second portions 64, each of which linearly extends from the first portion 62 via a first folded portion 63; and third portions 66, each of which linearly extends from the second portion 64 via a second folded portion 65.

As shown in FIG. 13 and FIG. 15, a guide plate 68 is integrally fixed to the lower jacket 12. Paired unadjusted shafts 71, each of which serves as a second drawing shaft that draws the energy absorbing wire 60 during the secondary collision, are fixed to the guide plate 68. In addition, a drawing unit 90 is fixed to the lower jacket 12. The drawing unit 90 integrally drives paired adjusted shafts 72, each of which serves as the second drawing shaft.

As shown in FIG. 15, the drawing unit 90 includes: a unit main body 91 fixed to the lower jacket 12; a movable shaft 92 (corresponding to a pyro pin) supported by the unit main body 91 to be movable in an axial direction; and an unillustrated drive element (specifically, the firing device) housed in the unit main body 91. Paired coupling arms 93 extend from a lower end of the movable shaft 92 to both sides. The corresponding adjusted shaft 72 extends upward in a bent manner from a distal end of each of the coupling arms 93. Each of the adjusted shafts 72 is supported by the unit main body 91 via the movable shaft 92 and the corresponding coupling arm 93.

Due to the axial movement of the movable shaft 92 relative to the unit main body 91, the adjusted shaft 72 is displaceable between an engaged position (see FIG. 15) at which the adjusted shaft 72 is engaged with the second folded portion 65 and a disengaged position (not shown) at which the adjusted shaft 72 is not engaged with the second folded portion 65. As shown in FIG. 15, a first guiding shaft 81 is fixed to the guide plate 68. A connected portion between the first folded portion 63 and the second portion 64 is held between the unadjusted shaft 71 and the first guiding shaft 81, and the first guiding shaft 81 faces the unadjusted shaft 71. In addition, a second guiding shaft 82 and a third guiding shaft 83 for guiding an outer side of the third portion 66 are fixed to the guide plate 68.

As shown in FIG. 13 and FIG. 15, the locked portion 61 (the relative position fixed portion) of the energy absorbing wire 60 is locked by a locking portion 96 with a hook shape, for example, that is provided in a pressing member 95. The pressing member 95 moves integrally with the upper jacket 11 during the secondary collision. A portion of a telescopic lock mechanism 20A that achieves the telescopic lock/cancellation of the telescopic lock is disposed between the pressing member 95 and the upper jacket 11.

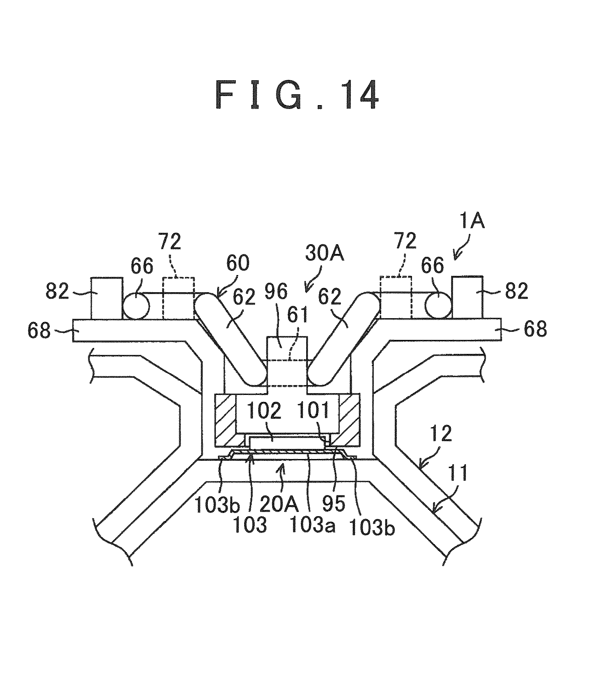

As shown in FIG. 14, the portion of the telescopic lock mechanism 20A in the second embodiment includes, for example, first engagement portions 101 and a second engagement portion forming member 103. The first engagement portions 101 include a plurality of engagement holes provided in the pressing member 95 (corresponding to the first engagement portion forming member). The second engagement portion forming member 103 is provided with at least one second engagement portion 102 that includes an engagement projection engaged with the first engagement portion 101, and the second engagement portion forming member 103 is fixed to the upper jacket 11. The second engagement portion forming member 103 includes: a main body 103a from which the second engagement portion 102 extends as an upward elastic tongue piece; and an urging portion 103b that includes an elastic leg, the elastic leg extending obliquely downward from the main body 103a and being received by the upper jacket 11.

The cam 23 and the pressing member 28 (see FIG. 13. In FIG. 13, the second engagement portion forming member 103 is not shown.) press the pressing member 95 corresponding to the first engagement portion forming member that is provided with the first engagement portions 101, toward the second engagement portion forming member 103. The cam 23 and the pressing member 28 have the same configurations as those in the first embodiment that is shown in FIG. 1 and FIG. 3. When the upper jacket 11 moves relative to the lower jacket 12 and the telescopic adjustment is performed, the upper jacket 11 moves in the axial direction X relative to the energy absorbing wire 60 and the pressing member 95. The position of the energy absorbing wire 60 relative to the lower jacket 12 is fixed via the second drawing shafts (the unadjusted shafts 71 and the adjusted shafts 72). The pressing member 95 locks the locked portion 61 of the energy absorbing wire 60.

In the first case where the value detected by the crash sensor 37 exceeds the specified value during the secondary collision (corresponding to the case where the shock during the secondary collision is large), the ECU 36 does not actuate the firing device that is the drive element. Accordingly, in the first case where the pyro switch is OFF during the secondary collision, the locked portion 61 (the relative position fixed portion) of the energy absorbing wire 60 is pressed by the pressing member 95. Thus, as shown in FIG. 17, each first folded portion 63 is drawn by the unadjusted shaft 71 as the second drawing shaft, and each second folded portion 65 is drawn by the adjusted shaft 72 as the second drawing shaft. In this way, the energy absorbing wire 60 is plastically deformed, and thus the first shock absorbing load can be obtained.

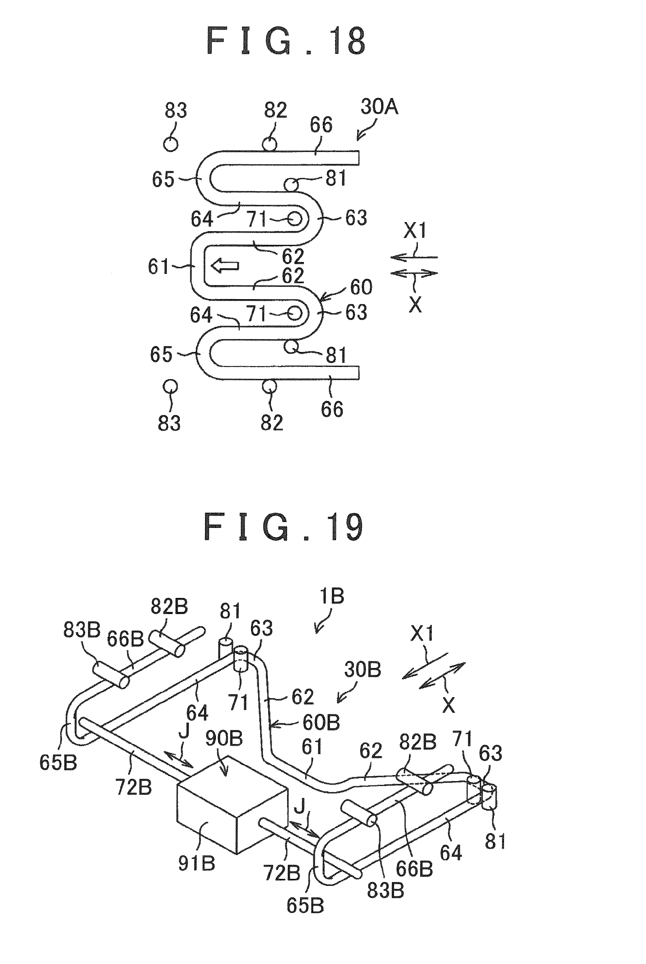

On the contrary, in the second case where the value detected by the crash sensor 37 is equal to or lower than the specified value during the secondary collision (corresponding to the case where the shock during the secondary collision is small), the ECU 36 actuates the firing device that is the drive element. Accordingly, each adjusted shaft 72 as the second drawing shaft is displaced to the disengaged position. Thus, as shown in FIG. 18, in the second case where the pyro switch is ON during the secondary collision, only the unadjusted shafts 71 as the second drawing shafts draw the corresponding first folded portions 63. Thus, the energy absorbing wire 60 is plastically deformed. In this way, the second shock absorbing load that is lower than the first shock absorbing load obtained in the first case can be obtained.

According to the second embodiment, the number of the second drawing shafts that draw the energy absorbing wire 60 during the secondary collision is variable. Thus, the shock absorbing load during the secondary collision is also variable. More specifically, the shock absorbing load is adjusted by switching between a state in which the unadjusted shafts 71 and the adjusted shafts 72 as the second drawing shafts draw the corresponding folded portions 63, 65 during the secondary collision (see FIG. 17) and a state in which only the unadjusted shafts 71 draw the corresponding first folded portions 63 during the secondary collision (see FIG. 18).

In addition, the upper jacket 11 moves relative to the energy absorbing wire 60 and the pressing member 95 and thereby the telescopic adjustment is performed. The locked portion 61 as the relative position fixed portion of the energy absorbing wire 60 moves together with the upper jacket 11 during the secondary collision. Thus, the energy absorbing wire 60 is drawn by at least the unadjusted shafts 71 and the shock absorbing load is generated.

In the shock absorbing mechanism 30A of the steering system 1A in the second embodiment shown in FIG. 15, each adjusted shaft 72 extends in parallel with the unadjusted shaft 71. Alternatively, as shown in a shock absorbing mechanism 30B of a steering system 1B in a third embodiment shown in FIG. 19, a direction in which an adjusted shaft 72B extends may not be parallel to a direction in which the unadjusted shaft 71 extends. The paired adjusted shafts 72B (corresponding to the pyro pin) extend to both sides from a unit main body 91B of a drawing unit 90B. Each of the adjusted shafts 72B moves in the drawing shaft direction J and thus is displaced to an engaged position where the adjusted shaft 72B is engaged with a corresponding second folded portion 65B of the energy absorbing wire 60B, and to a disengaged position where the adjusted shaft 72B is not engaged with the second folded portion 65B. In the energy absorbing wire 60B, the first folded portion 63 and the second folded portion 65B are folded on planes that differ from each other. A second guiding shaft 82B and a third guiding shaft 83B guide an upper side of a third portion 66B of the energy absorbing wire 60B.

The components in the embodiment shown in FIG. 19 that are the same as those in the embodiment shown in FIG. 15 are denoted by the same reference numerals as those used for the components in the embodiment shown in FIG. 15. The present invention is not limited to the above-described embodiments, and various modifications can be made thereto within the scope of the present invention.

## Claims

1. A steering system **characterized by** comprising:
a steering shaft (3) having an end to which a steering member (2) is coupled, the steering shaft (3) being extendable and contractable in an axial direction;
a steering column (10) that includes a hollow lower jacket (12) and a hollow upper jacket (11), and that supports the steering shaft (3) such that the steering shaft (3) is rotatable, the steering column (10) being extendable and contractable in the axial direction due to relative movement of the lower jacket (12) and the upper jacket (11), and the lower jacket (12) and the upper jacket (11) being fitted to each other; and
a shock absorbing mechanism (30; 30A; 30B) that absorbs a shock in conjunction with movement of the upper jacket (11) relative to the lower jacket (12) during a secondary collision, wherein:
the shock absorbing mechanism (30; 30A; 30B) includes: a drawing shaft whose position in a relative movement direction relative to one of the upper jacket (11) and the lower jacket (12) is fixed during the secondary collision; and an energy absorbing member (35; 60; 60B) that includes a relative position fixed portion (38; 61) whose position in the relative movement direction relative to the other of the upper jacket (11) and the lower jacket (12) is fixed during the secondary collision;
the energy absorbing member (35; 60; 60B) is plastically deformed by being drawn by the drawing shaft during the secondary collision;
a first drawing shaft (32) or a plurality of second drawing shafts (71, 72; 71, 72B) is provided as the drawing shaft, the first drawing shaft (32) having a plurality of drawing portions (32a, 32b) with different outside diameters that are separated from each other in a drawing shaft direction, and the plurality of second drawing shafts (71, 72; 71, 72B) having a constant outside diameter;
the plurality of second drawing shafts (71, 72; 71, 72B) includes an adjusted shaft (72; 72B) whose position is able to be adjusted in the drawing shaft direction and an unadjusted shaft (71) whose position is unable to be adjusted in the drawing shaft direction;
the shock absorbing mechanism (30; 30A; 30B) includes a drawing unit (34; 90; 90B) including: a unit main body that is fixed to the one of the upper jacket (11) and the lower jacket (12); the first drawing shaft (32) or the adjusted shaft (72; 72B) that is supported by the unit main body and is displaceable in the drawing shaft direction that intersects with the relative movement direction of the upper jacket (11) and the lower jacket (12); and a drive element (33) that is housed in the unit main body and drives the first drawing shaft (32) or the adjusted shaft (72; 72B) in the drawing shaft direction; and
the drive element (33) drives the first drawing shaft (32) or the adjusted shaft (72; 72B) to change the drawing portion of the first drawing shaft (32) that is engaged with the energy absorbing member (35; 60; 60B) to draw the energy absorbing member (35; 60; 60B) during the secondary collision or to change the number of the second drawing shafts engaged with the energy absorbing member (35; 60; 60B) to draw the energy absorbing member (35; 60; 60B) during the secondary collision among the plurality of second drawing shafts (71, 72; 71, 72B) such that a shock absorbing load is changed.

2. The steering system according to claim 1, wherein:
the unit main body is fixed to the upper jacket (11);
the energy absorbing member is an energy absorbing plate (35) that is provided with a slit (38) extending in the relative movement direction, and the energy absorbing plate (35) is plastically deformed by relative movement of one of the drawing portions of the first drawing shaft (32) and the slit (38) in the relative movement direction during the secondary collision such that the shock absorbing load is generated; and
a width of the slit (38) is set smaller than an outside diameter of each of the drawing portions of the first drawing shaft (32), and the slit (38) constitutes a relative position fixed portion whose position relative to the lower jacket (12) in the relative movement direction is fixed during the secondary collision.

3. The steering system according to claim 2, wherein:
a telescopic lock mechanism that fixes a position of the upper jacket (11) relative to the lower jacket (12) in the axial direction is provided;
the telescopic lock mechanism (20) includes: a fixed bracket (17) that is provided with a rotary shaft insertion hole (40), and is fixed to a vehicle body (13); a rotary shaft (21) rotatably supported by the rotary shaft insertion hole (40); an operation lever (22) that rotates together with the rotary shaft (21); a cam (23) that rotates together with the rotary shaft (21); a first engagement portion forming member (25) provided with a plurality of first engagement portions (24) that is provided in the energy absorbing plate (35), the first engagement portions (24) being separated from each other in the relative movement direction; and a second engagement portion forming member (27) that is provided with at least one second engagement portion (26), and is pressed by the cam (23) such that the second engagement portion (26) is engaged with the corresponding first engagement portion (24);
the energy absorbing plate (35) has a restriction hole (39) which communicates with one end (38a) of the slit (38), through which the first drawing shaft (32) is inserted, and which restricts relative movement of the energy absorbing plate (35) and the first drawing shaft (32) in the relative movement direction; and
the first engagement portion forming member (25) and the energy absorbing plate (35) are integrally formed of a single member such that the first engagement portion forming member (25) extends from the restriction hole (39) of the energy absorbing plate (35) toward a side opposite to the slit (38).

4. The steering system according to claim 3, wherein when telescopic adjustment is performed in a telescopic lock canceled state in which engagement between the first engagement portion (24) and the second engagement portion (26) is canceled, the energy absorbing plate (35), in which the first drawing shaft (32) is engaged with the restriction hole (39), and the first engagement portion forming member (25) integral with the energy absorbing plate (35) move together with the upper jacket (11).

5. The steering system according to claim 3 or 4, wherein, in a locked state in which the first engagement portion (24) and the second engagement portion (26) are engaged, the first drawing shaft (32) moves together with the upper jacket (11) relative to the energy absorbing plate (35) during the secondary collision such that the first drawing shaft (32) moves relative to the slit (38) in a direction in which the slit (38) extends and the shock absorbing load is generated.

6. The steering system according to claim 1, wherein:
the energy absorbing member includes an energy absorbing wire (60; 60B) including: a locked portion (61) as the relative position fixed portion that is locked by a pressing member (95), the pressing member (95) moving together with the upper jacket (11) during the secondary collision; a first folded portion (63) that is folded in the relative movement direction and is engaged with the unadjusted shaft (71) such that the first folded portion (63) is drawn during the secondary collision; and a second folded portion (65; 65B) that is folded in an opposite direction as compared to the first folded portion (63) and is engaged with the adjusted shaft (72; 72B) that is at an engaged position such that the second folded portion (65; 65B) is drawn during the secondary collision;
the adjusted shaft (72; 72B) is displaceable in the drawing shaft direction to the engaged position where the adjusted shaft (72; 72B) is engaged with the second folded portion (65; 65B) and to a disengaged position where the adjusted shaft (72; 72B) is not engaged with the second folded portion (65; 65B); and
the drive element (33) drives the adjusted shaft (72; 72B) in the drawing shaft direction to switch between a state in which the unadjusted shaft (71) is engaged with the first folded portion (63) to draw the first folded portion (63) and the adjusted shaft (72; 72B) is engaged with the second folded portion (65; 65B) to draw the second folded portion (65; 65B) during the secondary collision such that the energy absorbing wire (60; 60B) is drawn, and a state in which only the unadjusted shaft (71) is engaged with the first folded portion (63) to draw the first folded portion (63) during the secondary collision such that the energy absorbing wire (60; 60B) is drawn.

7. The steering system according to claim 6, wherein
when the upper jacket (11) moves relative to the lower jacket (12) such that telescopic adjustment is performed, the upper jacket (11) moves relative to the energy absorbing wire (60; 60B) and the pressing member (95) in the relative movement direction, a position of the energy absorbing wire (60; 60B) relative to the lower jacket (12) being fixed via the second drawing shafts (71, 72; 71, 72B), and the pressing member (95) locking the locked portion (61) of the energy absorbing wire (60; 60B).

8. The steering system according to claim 6 or 7, wherein the locked portion (61) of the energy absorbing wire (60; 60B) moves together with the upper jacket (11) and the pressing member (95) relative to at least the unadjusted shaft (71) among the second drawing shafts (71, 72; 71, 72B) during the secondary collision such that the energy absorbing wire is drawn by at least the unadjusted shaft (71) and the shock absorbing load is generated.
